# EUROPEAN PATENT APPLICATION

(11) **EP 2 400 442 A1**
(43) Date of publication of application: **28.12.2011**
(21) Application number: 10305694.1
(22) Date of filing: 28.06.2010
(51) Int. Cl.: G06Q 10/00, H04L 12/58

(54) **A method for identifying email communication, and a server and email client for executing same**

(71) Applicant: Alcatel Lucent, 75007 Paris (FR)
(72) Inventor: Kanoun, Wael, 91620 Nozay (FR); Dubus, Samuel, 91620 Nozay (FR)
(74) Representative: Nicolle, Olivier

(57) **Abstract**

A method for identifying email communication between a sender and at least one recipient, comprising the steps of creating a separate instance of said email communication for each recipient; associating, with each of said email communication instance, a tracking component comprising unique identity information of the corresponding recipient; sending each separate instance of said email communication associated with the tracking component to the recipient with which the email instance is associated.

## Description

### FIELD OF THE INVENTION

The present invention concerns a method for identifying email communication between a sender and at least one recipient, and a server and email client for same.

### BACKGROUND

This section introduces aspects that may be helpful in facilitating a better understanding of the invention. Accordingly, the statements of this section are to be read in this light and are not to be understood as admissions about what is in the prior art or what is not in the prior art.

Controlling document dissemination is an important issue in confidential environments, whether in the office place to guard against competitors, government organizations to guard against espionage, or even in the private sphere against privacy violation. This unauthorized transmission of documents is sometimes referred to as "leaks", whether caused inadvertently or not. Document transmission to unauthorized third parties becoming increasingly relevant in the age of ubiquitous email and internet, as information sharing becomes ever easier.

Parties wishing to limit unauthorized access to documents by third parties have recourse to various encryption mechanisms in the document transmission phase. However, such mechanisms protect only the communication between authorized parties, thus effectively preventing third parties from "tapping" into the communication stream and eavesdropping. The encryption mechanism does not, however, prevent the recipient of the email from forwarding the email message to an unauthorized third party.

To this end, technical solutions were devised that disable email forwarding of confidential emails to further parties, prevent printing of documents regarded as confidential, etc.

This solution is not entirely satisfactory as it relies on all end parties using compatible technology, and the present invention has for object to find an alternative solution.

### SUMMARY

An object of the invention is a method for identifying email communication between a sender and at least one recipient, said method comprising the steps of:
- creating a separate instance of said email communication for each recipient;
- associating, with each of said email communication instance, a tracking component comprising unique identity information of the corresponding recipient;
- sending each separate instance of said email communication associated with the tracking component to the recipient with which the email instance is associated.

Contrary to popular effort in the prior art of preventing dissemination in the first place, the present invention reverses popular wisdom and all research effort by charging accountability to the individual recipient, leaving him accountable and providing means to trace any and all leaks back to the originating source a posteriori.

These characteristics ensure that the individual is himself the guardian of the information, as all dissemination can be traced back to him.

Furthermore, applying a tracking component before sending ensures that ,even when printed, all document leaks may be traced back to particular recipients with an analysis of the marking component on the leaked document, whatever the means of dissemination: electronic, paper, projection, and so on.

In an embodiment, the tracking component is a non-visible watermark. This allows for increased discretion when communicating.

In an embodiment, the tracking component is a visible watermark. This allows for an additional reminder to recipients of the confidential nature of the communication.

In an embodiment, the tracking component endures when said email message is printed, diffused, transmitted or otherwise materialized. This allows for enduring traces for tracking the email communication.

In an embodiment, the unique identity information comprises the email address of the recipient. This allows to easily identify the recipient.

In an embodiment, the additional step of verifying the character of each of said recipient prior to sending the email message. This allows for increased security during the email communication, for example when communicating outside of a trusted network or group of recipients.

In an embodiment, the method comprises flagging means adapted to suspend the association of the marking component to the email communication punctually. This allows a sender to temporarily disable the method, for example if wanted to send a publicly-open email communication.

A further object of the invention is a server adapted for securely distributing email communications from a sender destined to one or more recipients, said server comprising:
- a receiving module, adapted for receiving email communications from a sender over a communication network;
- an instancing module, adapted for creating, for each email communication received by said receiving module, a separate instance of said email communication for each recipient;
- a tracking module, adapted for associating, with each email communication instance created by said instancing module, a tracking component comprising unique identity information of the corresponding recipient;
- a sending module, adapted for sending over a communication network each separate instance of said email communication associated with the tracking component to the recipient with which the email message is associated.

Yet a further object of the invention is an email client adapted to be executed on a sender's terminal connected to a communication network for sending email communication to one or more recipients, said email client comprising:
- a message and attachment module, adapted for coding an email communication from a message and an optional attachment;
- an instancing module, adapted for creating a separate instance of said email communication for each recipient;
- a tracking module, adapted for associating, with each email communication instance, a tracking component comprising unique identity information of the corresponding recipient;
- a sending module, adapted for sending each separate instance of said email communication associated with the tracking component to the recipient with which the email message is associated.

### BRIEF DESCRIPTION OF THE FIGURES

Some embodiments of the present invention are now described, by way of example only, and with reference to the accompanying drawings. The same reference number represents the same element or the same type of element on all drawings.
FIG. 1 illustrates schematically an exemplary communications environment enabling the present invention;
FIG. 2 illustrates schematically a first exemplary embodiment of a server used in FIG. 1;
FIG. 3 illustrates schematically a second exemplary embodiment of a server used in FIG. 1;
FIG. 4 illustrates schematically a second exemplary communications environment enabling the present invention;
FIGS. 5 and 6 illustrate the computational process for enabling the exemplary embodiments of FIGS. 1 to 4.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

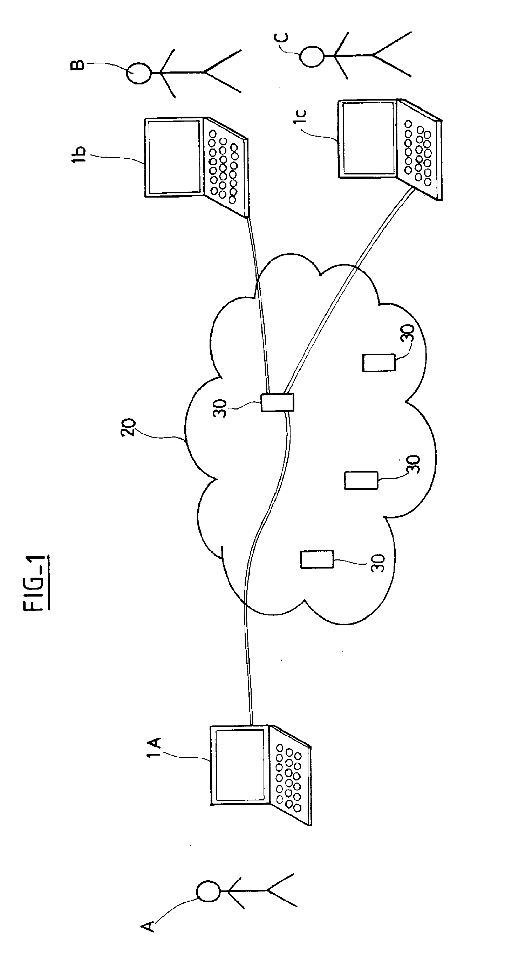

The invention relates to settings in which it is desirable to mark diffusion email messages and, if appropriate, attachments, for transmission. For example, according to a first exemplary embodiment, as illustrated at figure 1, a typical environment is for a sender A to send an email to at least one recipient, here recipients B and C.

Sender A disposes of an input terminal 1a, for example a personal computer, a phone, a tablet computer, etc., connected to a communication network 20 such as an office network (open or closed) or internet. The terminal 1 comprises a mail user agent (MUA) or similar (for example, a webmail service) adapted for composing email messages and for, if necessary, attaching files therewith.

Recipients B and C are similarly equipped with terminals 1 b, 1 c respectively, each being connected to the same communication network 20 as terminal 1a.

The communication network 20 may comprise any communication protocols for exchanging messages, including email communication messages. Protocols may include signaling, authentication and error detection and correction capabilities, and may be implemented by hardware, software, or a combination of the two. Common protocols to be construed within the present communication protocols include, but are not limited to: Internet Protocol (IP), Transmission Control Protocol (TCP), Hypertext Transfer Protocol (HTTP), Post Office Protocol (POP), Simple Mail Transfer Protocol (SMTP), Internet Message Access Protocol (IMAP), or a combination of these.

The communication environment further comprises at least one server 30, such as a Mail Transfer Agent (MTA) or Mail Relay, adapted to transfer electronic mail messages from one terminal to another, here from terminal 1 a to terminals 1b, 1c. The MTA 30 may be part of a proprietary service on a host network, such as a Microsoft Outlook Exchange® server, or on an Internet Server Provider's (ISP) SMTP server.

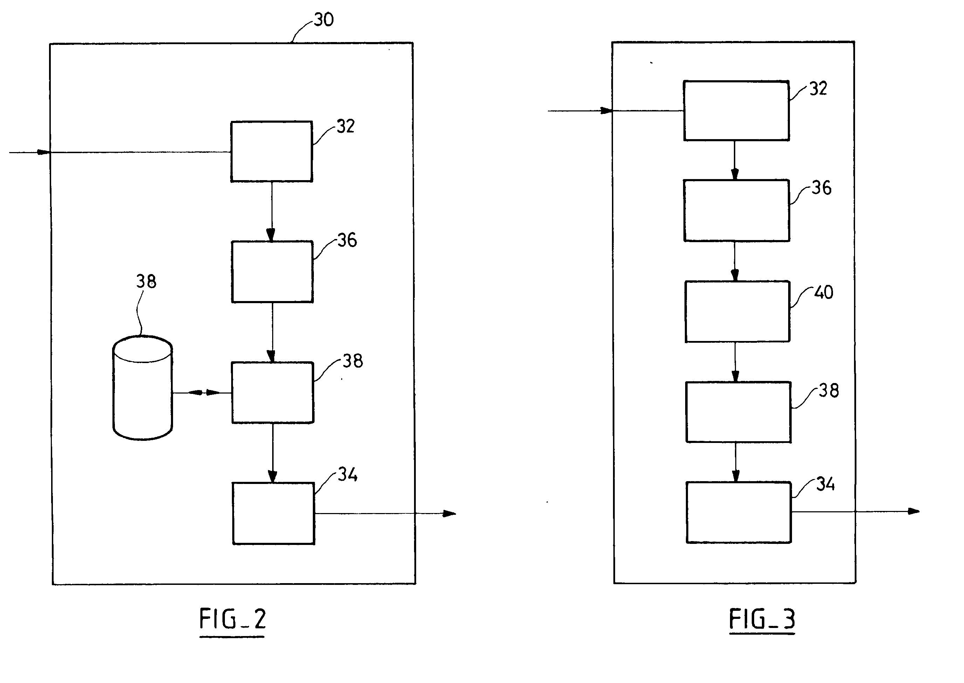

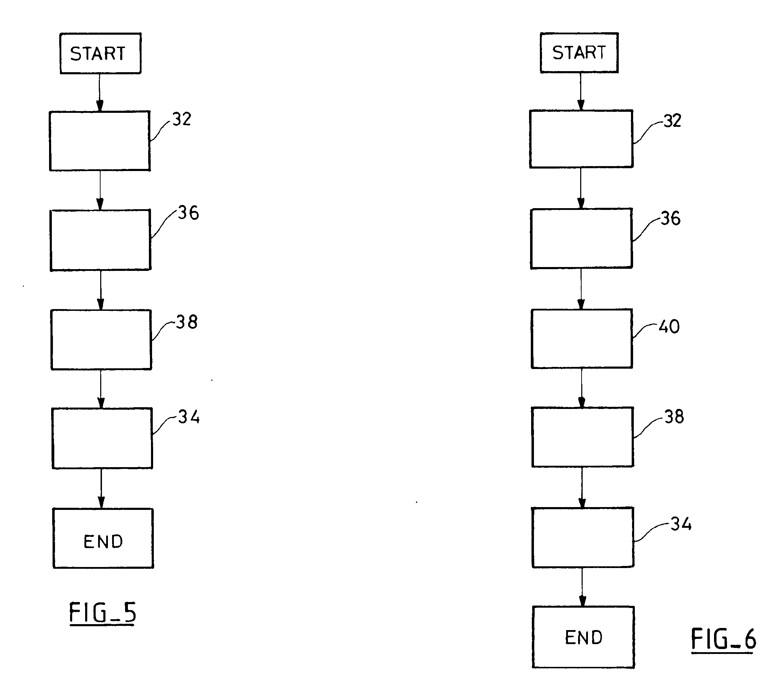

Figures 2 and 5 illustrate in greater detail the server 30 of figure 1, comprising:
- a receiving unit 32, adapted for receiving email messages communication from terminals 1a, 1b, 1 c;
- a sending unit 34, adapted for sending email messages communication to recipients 1 a, 1b, 1 c;
- a splitting unit 36, adapted for creating separate instances of the email received by said receiving unit 32, whereby a separate instance of the email is created for each recipient to which the email is destined;
- a marking unit 38, adapted for associating, with each of the email instances created by the splitting unit 36, a tracking component comprising unique identity information of the corresponding recipient to which the email instance is destined.

In the context of the present invention, an email instance is a virtual copy of the originating email sent by the sender. There are as many virtual copies of an email as there are recipients of the email.

The marking unit 38 is associated with an identity database 39 from which it is able to read, store, or update identity information of recipients, and optionally associate a particular means of marking a tracking component for a given identity. In particular, the marking information may be selected based on predetermined criteria, which may be stored in the marking database 39.

A tracking component may take the form of:
- a watermark associated across the email and all its attachments;
- a comment box with identity information associated on every page of an email;
- non visual markers, such as security dots, colour patterns unique to the email, etc.;
- electronic tags associated with the email message header or body;
- or a combination of the above;

Depending upon the type and characteristics of the marking component, it may be obviously visible or not (ie. dissimulated).

Furthermore, the marking component is preferably enduring. In other words, the marking component is "sustaining", or "lasting", i.e. that it remains associated with the email message irrespective of its form (paper, electronic, or video diffusion) or means of transmission.

Identity information comprises all elements able to positively identify a particular person A,B,C, Mail User Agent, or terminal 1a,1b,1c. Such elements may for example comprise:
- name
- email address
- employee ID
- social security number
- MAC address of the terminal
- or a combination of the above

Time, IP address, sender email address and versioning elements may be further incorporated into the Identity information for version tracking and identification.

When person A wishes to send a tracked email message to two recipients B, C, he may compose his email message, and if desired, annex an attachment to the email message on the MUA of terminal 1 a. Once he sends it, the email message will be sent over a communication network, for example using the SMTP protocol, to the local server 30 (eg. a Mail Transfer Agent (MTA)), where it will be received and acknowledged by the receiving unit 32, as also shown on figure 5.

The receiving unit 32 then transfers the email message to the splitting unit 36, which will determine the number of recipients the email is addressed to, here two recipients, recipients A and B. The splitting unit 36 will then "split" the email, ie. create as many instances, or virtual copies, of the original emails as there are recipients, here two instances.

Each of these email instances will be passed to the marking unit 38. The marking unit 38 will, with reference to the recipient information and in correspondence with the identity database 39, associate a tracking component with the email instance. It is possible that each email instance (addressed to a different recipient) is associated with a different tracking component in accordance with the data of the identity database 39, or other predetermined factors, such as time-of-day, location, etc.

Once each email instance is associated with a tracking component, the email instances are sent to their respective recipients via the sending unit 34.

For each recipient 1 b, 1 c, the email message, including any attachments, that he/she receives may:
- have visual cues to identify that the email message is personalized and linked specifically to himself, for example with visible watermark features, or
- have hidden cues, that are not readily identifiable as tracking features to the recipient, such as with microdot technology, but which may be decoded to identify a particular recipient.

As such, the recipient may or may not be aware, or be made aware, that the email he has received comprises a unique tracking component.

It is to be noted that whether the email is consequently forwarded, printed, or printed and re-scanned, the tracking information remains with the email message, and is able to be decoded to recuperate the original identity information it was originally associated with, and preferably even after significant resolution loss, such as after lossy scanning. As such, the skilled person in the art will recognize the need to select appropriate tracking features, and will have the knowledge to do so.

Furthermore, the invention is not limited to the above-described exemplary embodiments.

In a variant of the present exemplary embodiment, the server 30 may be further adapted for verifying the identity of the recipients according to predetermined criteria, before allowing the sending unit 36 to send the email. This may be particularly useful when the recipient:
- is not a usual collaborator, i.e. he is external to the usual addressing group, such that the email address needs to be verified;
- is external to the organization or team, in order for him to specifically agree to receive confidential information and agree to a Terms of Conditions;
- is a mailing list.

With reference to figures 3 and 6, the server 30 may thus further comprise an authentication module 40 that may be placed after the splitting module 36 and before the marking unit 38, utilizing techniques such as "Callback verification" for verifying the identity.

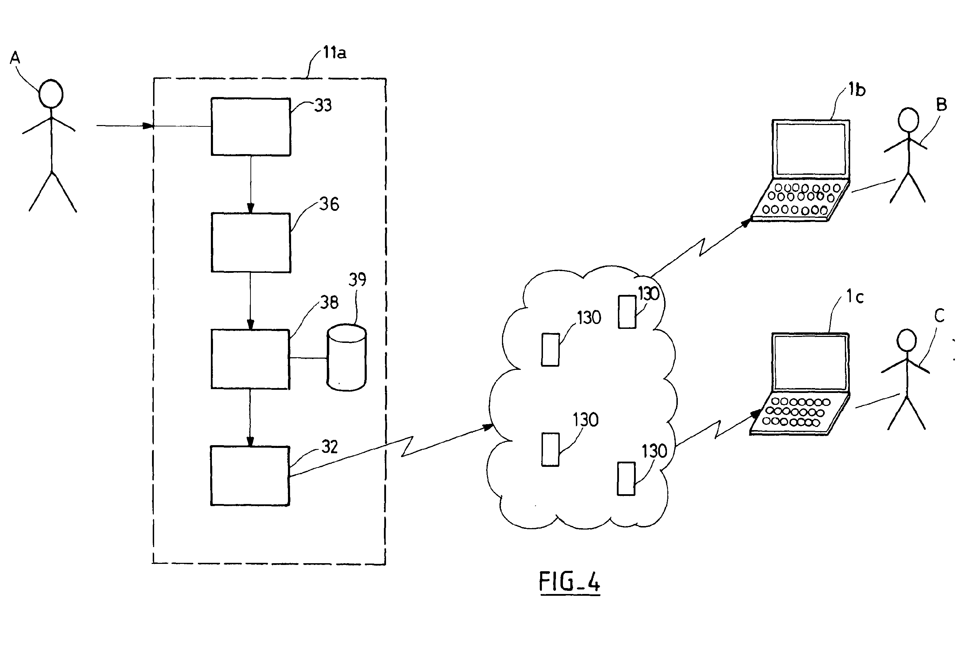

In another exemplary embodiment, the method for identifying email communication between a sender and at least one recipient of figure 1 is reproduced schematically at figure 4 in a way that the unique identity information and the marking is processed on the sender's terminal.

In this embodiment, the terminal 1 a of figure 1 is hereby referenced 11 a, and the server 30 of figure 1 is hereby referenced server 130a.

The server 130 constitutes a state-of-the art mail server, such as a Mail Transfer Agent (MTA) or Mail Relay, adapted to transfer electronic mail messages from one terminal to another, here from terminal 11 a to terminals 1 b, 1 c. The MTA 130 may be part of a proprietary service on a host network, such as a Microsoft Outlook Exchange® server, or on an internet Server Provider's (ISP) SMTP server.

Server 130 comprises means for receiving emails from terminals 11 a, 1 b, 1 c; and means for sending email messages communication to recipients 11 a, 1b, 1c.

Terminal 11 a comprises all the marking functions of server 30 of figure 1. In particular, terminal 11 a comprises:
- mail user agent (MUA) 33 adapted for composing email messages and for, in necessary, attaching files therewith;
- a sending unit 34, adapted for sending email messages communication to recipients 11 a, 1b, 1 c;
- a splitting unit 36, adapted for creating separate instances of the email composed by said MUA 33, whereby a separate instance of the email is created for each recipient to which the email is destined;
- a marking unit 38, adapted for associating, with each of the email instances created by the splitting unit 36, a tracking component comprising unique identity information of the corresponding recipient to which the email instance is destined.

The marking unit 38 is associated with an identity database 39 from which it is able to read, store, or update identity information of recipients, and optionally associate a particular means of marking a tracking component for a given identity.

Of course, the authentification functions of an authentification module 40 may also be implemented in a user terminal using much the same techniques as for the server 30 of figure 3.

For all intents and purposes, the functioning of the sending unit 34, the splitting unit 36, and the marking unit 38 are identical in figures 1 and 4.

When person A wishes to send a tracked email message to two recipients B, C, he may compose his email message, and if desired, annex an attachment to the email message on the MUA 33 of terminal 11a. Once he sends it, the email message will be sent over a communication network, for example using the SMTP protocol, to the local server 130 (eg. a Mail Transfer Agent (MTA)) as an intermediary to deliver it to the respective recipients 1b, 1 c.

In particular, the MUA 33 transfers the email message to the splitting unit 36, which will determine the number of recipients the email is addressed to, here two recipients, recipients A and B. The split module will then "split" the email, ie. create as many instances, or virtual copies, of the original emails as there are recipients, here two instances.

Each of these email instances will be passed to the marking unit 38. The marking unit 38 will, with reference to the recipient information and in correspondence with the identity database 39, associate a tracking component with the email instance. It is possible that each email instance (addressed to a different recipient) is associated with a different tracking component in accordance with the data of the identity database 39, or other predetermined factors, such as time-of-day, location, etc.

Once each email instance is associated with a tracking component, the email instances are sent to their respective recipients 1b, 1 c as individual emails by the sending unit 34 and via the intermediary servers 130.

In variants of all of the above-described embodiments, it is possible for the client (the sender) A to selectively choose when to mark a particular email message to be sent, by associating a key word in the message body, subject, or flagging a switch in the email header, or attaching an "enabling" file comprising a predetermined key. The MUA 33 or the server 30 are then adapted to analyse these parts of the email message to decide whether to selectively apply a tracking component to the email.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

## Claims

1. A method for identifying email communication between a sender and at least one recipient, said method comprising the steps of:
- creating a separate instance of said email communication for each recipient;
- associating, with each of said email communication instance, a tracking component comprising unique identity information of the corresponding recipient;
- sending each separate instance of said email communication associated with the tracking component to the recipient with which the email instance is associated.

2. Method according to claim 1, wherein the tracking component is a non-visible watermark.

3. Method according to claim 1, wherein the tracking component is a visible watermark.

4. Method according to any one of claims 1 to 3, wherein said tracking component endures when said email message is printed, diffused, transmitted or otherwise materialized.

5. Method according to any one of claims 1 to 4, wherein the unique identity information comprises the email address of the recipient.

6. Method according to any one of claims 1 to 5, comprising the additional step of verifying the character of each of said recipient prior to sending the email message.

7. Method according to any one of the claims 1 to 6, comprising flagging means adapted to suspend the association of the marking component to the email communication punctually.

8. A server (30) adapted for securely distributing email communications from a sender destined to one or more recipients, said server comprising:
- a receiving module (32), adapted for receiving email communications from a sender over a communication network;
- an instancing module (36), adapted for creating, for each email communication received by said receiving module, a separate instance of said email communication for each recipient;
- a tracking module (38), adapted for associating, with each email communication instance created by said instancing module, a tracking component comprising unique identity information of the corresponding recipient;
- a sending module (34), adapted for sending over a communication network each separate instance of said email communication associated with the tracking component to the recipient with which the email message is associated.

9. A server according to claim 8, wherein the tracking component associated with each of the email communication instances is enduring.

10. A server according to claim 8 or 9, further comprising an authentication module (40) adapted to condition the sending of the email communication according to predetermined parameters.

11. An email client adapted to be executed on a sender's terminal connected to a communication network for sending email communication to one or more recipients, said email client comprising:
- a message and attachment module (33), adapted for coding an email communication from a message and an optional attachment;
- an instancing module (36), adapted for creating a separate instance of said email communication for each recipient;
- a tracking module (38), adapted for associating, with each email communication instance, a tracking component comprising unique identity information of the corresponding recipient;
- a sending module (34), adapted for sending each separate instance of said email communication associated with the tracking component to the recipient with which the email message is associated.

12. An email client according to claim 11, further comprising an authentication module (40) adapted to condition the sending of the email communication according to predetermined parameters.

13. An email client according to claim 11 or 12, wherein the tracking component associated with each of the email communication instances is enduring.
